# EUROPEAN PATENT APPLICATION

(11) **EP 2 637 296 A1**
(43) Date of publication of application: **11.09.2013**
(21) Application number: 12158162.3
(22) Date of filing: 06.03.2012
(51) Int. Cl.: H02M 5/14, H02M 7/483

(54) **HVDC converter station with 2-phase modular multilevel converter and Scott-T 2 to 3 phase transformer**

(71) Applicant: Siemens Aktiengesellschaft, 80333 München (DE)
(72) Inventor: Dawes, John Arthur, 1397 Nesoya (NO)

(57) **Abstract**

A converter system (10) for converting a DC voltage into a three-phase AC voltage is provided. A two-phase inverter (20) provides a DC input (21,22) and has first and second AC outputs (23, 24). The two-phase inverter (20) is configured to convert a DC voltage applied to the DC input (21,22) into a first AC voltage (91) provided at the first AC output (23) and a second AC voltage (92) provided at the second AC output (24). The first and second AC voltages (91,92) are phase shifted with respect to each other. A transformer (30) is connected to the first and second AC outputs (23,24) for transforming the first and second AC voltages (91,92) into a three-phase AC voltage (Y1, Y2, Y3).

## Description

### Field of the invention

The invention relates to a converter system for converting a DC voltage received on a DC input, in particular via a DC transmission line, to a three-phase AC voltage. The invention further relates to a converter station of a HVDC transmission system and to an offshore installation comprising a converter station.

### Background

Converters have a range of applications. These include for example the use in variable frequency drives (VFDs), in which a supply voltage having a particular fixed frequency is converted into a voltage having a variable frequency which can be adjusted by controlling the VFD. Other applications include the transport of electric energy by using DC (direct current) transmission. Conventional systems use alternating current (AC) for power transmission. Yet for long distance transmissions, AC transmission systems suffer from higher electrical losses and are further more expensive than corresponding DC transmission systems. Also, a drawback of AC transmission systems is reactive power, which can be due to the capacitance of power transmission cables. Large reactive power results in high currents in the transmission cable which do not result in actual work been performed at the receiving end of the power transmission.

Power generation systems are commonly configured to generate AC electric power, and conventional power distribution grids operate with AC electric power having a fixed frequency, e.g. 50 or 60 Hz. DC transmission systems, such as HVDC (high voltage direct current) generally comprise a converter which transforms the AC electric power received from a power source, such as a generator set or the general power grid, into a DC voltage which is transmitted via the DC transmission cable. At the receiving end of the DC transmission system, another converter again generates an AC voltage from the received DC voltage. The generated AC voltage has a fixed frequency, such as 50 or 60 Hz, and can be used for operating one or more loads. Transmission distances well in excess of 100 km can be achieved by DC transmission systems. At present, HVDC systems are already in operation in which the HVDC link has a length of more than 1.000 km.

Converters that are used in DC transmission systems are generally complex and expensive. In particular, such converters need to handle high electric powers, which can be in excess of 1 MW. Similarly, in drives applications, converters for producing an AC output voltage with a variable frequency are also complex and cost intensive. Accordingly, it is desirable to reduce the complexity and the costs of such converters.

### Summary

There is a need for improved voltage conversion system which are less complex and more cost efficient to produce.

This need is met by the features of the independent claims. The dependent claims describe embodiments of the invention.

An embodiment of the invention provides a converter system for converting a DC voltage received on a DC input, e.g. via a transmission line, to a three-phase AC voltage. The converter system comprises a two-phase inverter providing the DC input and having a first and a second AC output. The two-phase inverter is configured to convert a DC voltage applied to the DC input into a first AC voltage provided at the first AC output and a second AC voltage provided at the second AC output. The first and the second AC voltages are phase shifted with respect to each other. The converter system further comprises a transformer having two AC inputs and three AC outputs. The two AC inputs are connected to the first and second AC outputs of the two-phase inverter. The transformer is adapted to transform the first and second AC voltages supplied by the two-phase inverter into a three-phase AC voltage. Each phase of the three-phase AC voltage is provided at a different one of the three AC outputs of the transformer. Each phase of the three-phase AC voltage is phase shifted with respect to each of the other two phases.

In such configuration, the converter system is less complex, since it only requires a two-phase inverter, i.e. only two AC voltages need to be generated by the two phase inverter. Consequently, the two phase inverter is less complex and can be produced more cost efficiently. Also, with such converter system, no additional transformer for converting the AC voltage output by the inverter is required. Also, since the transformer performs a transformation of a two-phase AC voltage into a three-phase AC voltage, the transformer can be made less complex and more cost efficient than conventional three-phase to three-phase transformers.

A further advantage is that the converter system requires less space and has a reduced weight compared to conventional converters. In particular for an offshore application, in which electric power is for example transmitted to an offshore platform, such reductions in size and weight are significant, and result furthermore in significant cost savings.

In an embodiment, the converter system is an HVDC converter system, the DC input of which is coupled to an HVDC transmission line. A less complex and less expensive HVDC transmission can thus be achieved.

In an embodiment, the two-phase inverter has a first converter leg connected between a first DC terminal and a second DC terminal of the DC input. Furthermore, the inverter comprises a second converter leg connected in parallel to the first converter leg between the first DC terminal and the second DC terminal. The first and the second AC outputs are coupled to the first and second converter legs, respectively. The inverter may thus have exactly two converter legs and exactly two AC outputs. Whereas a conventional three-phase inverter generally requires three converter legs, the two-phase inverter of the converter system only requires two converter legs. Consequently, the number of high voltage electric components in the inverter can be reduced significantly, resulting in a reduced cost of the inverter. In particular, one third of the converter components can be omitted resulting in a significant cost reduction.

Each converter leg may comprise a first converter arm and a second converter arm connected in series between the first and second DC terminals. The first AC output is connected between the first and second converter arms of the first converter leg, and the second AC output is connected between the first and second converter arms of the second converter leg. Each converter arm may comprise two or more converter cells. In such configuration, the inverter may be capable of generating different voltage levels by making use of the two or more converter cells in each converter arm, thereby increasing the quality of the output AC voltage.

Each converter cell may be operable as a controlled voltage source. Each cell may for example comprise a capacitor and two switches, e.g. semi conductor switches, by means of which the capacitor can be connected in series between the first and second DC terminals of the respective converter leg. The controllable series connection of the capacitors of a converter leg can accordingly generate different voltage levels.

In an embodiment, the two-phase inverter is a two-phase multilevel converter, in particular a two-phase modular multilevel converter (MMC). Using a multilevel converter has the advantage that comparatively smooth output voltage wave forms can be obtained. Furthermore, since a two-phase multilevel converter can be employed, only one third of the converter cells are required, thereby significantly reducing the costs of the multilevel converter.

In an embodiment, the two phase inverter is configured to employ pulse with modulation for performing a DC to AC conversion. In some embodiments, the inverter may only use pulse with modulation, while other embodiments it may employ a multilevel converter using additionally pulse with modulation.

The phase shift between the first and second AC voltages provided by the two-phase inverter may be about 90 degrees. In other words, the wave form of the AC voltage provided at one AC output of the inverter may proceed the wave form of the AC voltage provided at the other output of the inverter by about one quarter of the wave form, i.e. by π/2.

The phase shift between each two of the phases of the three-phase AC voltage may be about 120 degrees. As an example, a first phase may be considered to start at 0 degrees, the second phase may then start at about 120 degrees and the third phase may start at about 240 degrees phase shift, so that between each two of the phases, the phase shift is about 120 degrees. Accordingly, a conventional three phase AC voltage can be provided at the output of the transformer, thus enabling the operation of general three-phase loads.

In an embodiment, the transformer may have a first pair of coils and a second pair of coils, each pair of coils having a primary coil and a secondary coil. In particular, the transformer may have exactly a first and a second pair of coils. Thus, compared to a conventional three-phase to three-phase AC transformer, one pair of coils can be obmitted, resulting in a less complex transformer that is more cost efficient to produce.

The primary coil of the first pair of coils may be connected between the first AC output of the two-phase inverter and neutral, and the primary coil of the second pair of coils may be connected between the second AC output of the two-phase inverter at neutral. The secondary coil of the second pair of coils may be connected between a second AC output and a third AC output of the three AC outputs of the transformer. The secondary coil of the first pair of coils may at one end be connected to a center tap of the secondary coil of the second pair of coils. The first AC output of the three AC outputs of the transformer may be connected to an about 86.6 % tap of the secondary coil of the first pair of coils. In such arrangement, by only two pairs of coils, the two phase AC voltage having a 90 °C phase shift provided at the output of the inverter can directly be converted into a three phase AC voltage, having a 120 °C phase shift between each of the phases.

In an embodiment, the transformer is a Scott-T transformer. Such transformer can perform the two-phase to three-phase voltage conversion in an efficient and cost-effective manner.

The two-phase inverter and the transformer may be adapted to operate at a voltage within a voltage range of about 5 kV to about 200 kV, preferably within a voltage range of about 10 kV to about 180 kV. Higher voltage ranges, e.g. up to 800 kV, are also conceivable. Accordingly, the converter system may be used for HVDC transmission, wherein the electric energy is for example transmitted over a HVDC transmission line at a voltage of e.g. 150 kV, which is received by the converter system and transformed into the three phase AC voltage. Note that by means of the transformer, the voltage level of the output three-phase AC voltage can be adjusted, it may for example be stepped down into a low voltage range (e.g. up to about 1.000 V) or to a medium voltage range (e.g. a range between about 1.000 V and about 50.000 V).

A further embodiment of the invention provides a converter station of a HVDC transmission system. The converter station comprises a converter system in any of the above described configurations. A cost efficient and effective conversion of received DC voltage can be achieved by such converter station.

A further embodiment of the invention relates to an offshore installation, such as a offshore platform or a subsea installation, which comprises the above mentioned converter station. Since the converter station uses a two-phase inverter and a two-phase to a three phase transformer, the size and weight of the converter station can be reduced, thereby decreasing the amount of space required by the converter station at the offshore installation. Furthermore, capacity for taking up further weight can be freed at the offshore installation by making use of such converter station.

It is to be understood that the features mentioned above and those yet to be explained below can be used not only in the respective combinations indicated, but also in other combinations or in isolation, without leaving the scope of the present invention. In particular, the features of the embodiments described above and of those described hereinafter can be combined with each other unless noted to the contrary.

### Brief description of the drawings

The foregoing and other features and advantages of the invention will become further apparent from the following detailed description read in conjunction with the accompanying drawings. In the drawings, like reference numerals refer to like elements.
Figure 1 shows a converter station comprising a three phase converter and a three phase transformer.
Figure 2 is a schematic diagram illustrating a converter system according to an embodiment of the invention.
Figure 3A, 3B and 3C are schematic diagrams illustrating the phases of AC output voltages generated by a two-phase inverter of a converter system according to an embodiment of the invention.

### Detailed description

In the following, embodiments of the invention will be described in detail with reference to the accompanying drawings. It is to be understood that the following description of embodiments is given only for the purpose of illustration and is not to be taken in a limiting sense.

It should be noted that the drawings are to be regarded as being schematic representations only, and that elements in the drawings are not necessarily to scale with each other. Also, the coupling of physical or functional units as shown in the drawings or described hereinafter does not necessarily need to be a direct connection or coupling, but may also be a indirect connection or coupling, such as a connection or coupling with one or more additional intervening elements.

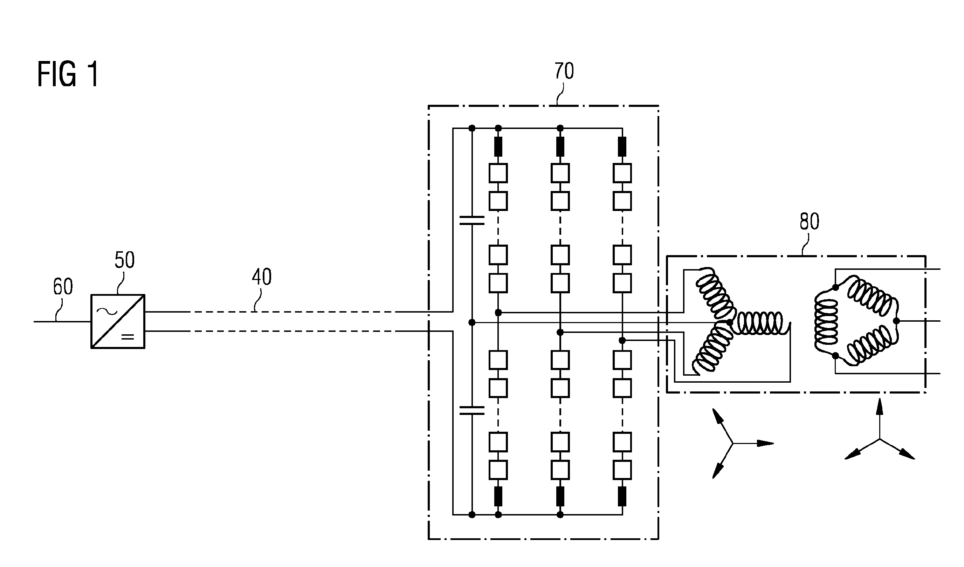

Figure 1 schematically illustrates a system comprising an inverter 70 and a transformer 80, the inverter 70 being coupled to a DC transmission line 40. The system may for example be installed at a remote location which is supplied with electric energy via a connection to a power grid 60. Three-phase AC voltage supplied by the power grid 60 is converted to a DC voltage by means of rectifier 50, and is transmitted via the DC transmission lines 40. Inverter 70 converts the received DC voltage into a three-phase AC voltage. The frequency may for example be chosen in accordance with the frequency of the power grid, e.g. 50 or 60 Hz. Transformer 80 steps up or steps down the voltage supplied by inverter 70 to obtain a distribution voltage for the local power grid. Different consumers can then draw power from the local power grid, as if they were connected directly to the power grid 60. By using such DC transmission, the electric energy can be transmitted over large distances, for example in excess of 100 km.

It can be seen, the inverter 70 comprises three converter legs, one for each phase. Similarly, the transformer 80 comprises three primary coils and three secondary coils for transforming the three phase AC voltage received from inverter 70. Consequently, such design results in relatively heavy and space consuming inverters and transformers. Also, due to the large number of power cells required in the inverter 70, the inverter is relatively costly.

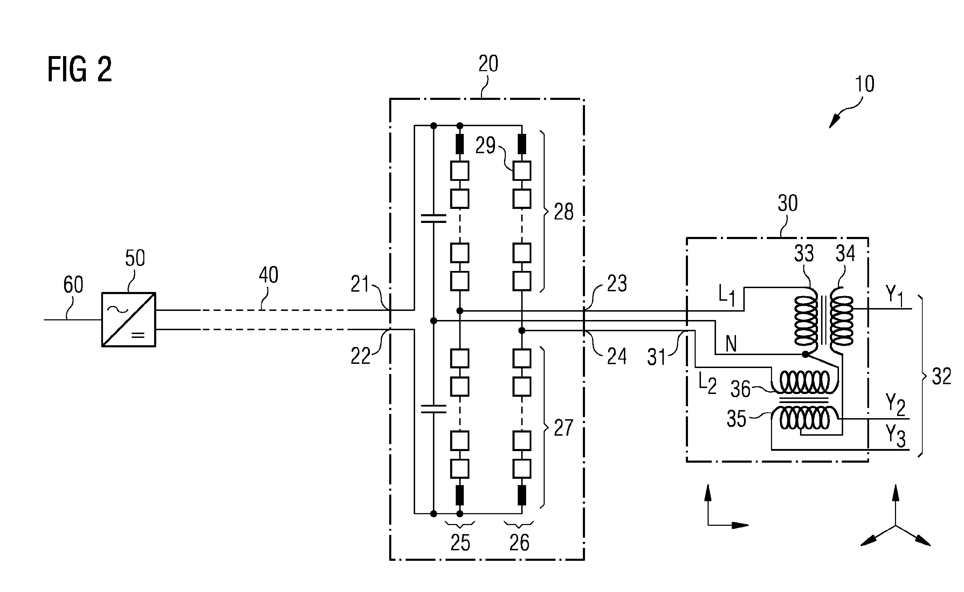

Figure 2 schematically illustrates a converter system 10 according to an embodiment of the invention having an inverter 20 and a transformer 30. In the example, AC voltage from a power grid 60 is converted by rectifier 50 to a DC voltage for transmission on a DC transmission line 40. It should be noted while the following description with respect to such DC voltage transmission, in particular HVDC, the converter system 10 may as well be used in different applications, including drive applications in which a DC voltage is to be converted into an AC voltage, e.g. for powering an electric motor.

In the example of figure 2, the inverter 20 is a modular multilevel converter (MMC). It should be clear that other types of converters may equally well be used in the converter system 10 according to the embodiment. The modular multilevel converter 20 comprises a DC input including DC terminals 21 and 22. Two converter legs 25, 26 are connected in parallel between the DC terminals 21, 22. Each converter leg comprises a first converter arm 27 and a second converter arm 28, wherein each converter arm includes a plurality of converter cells 29. For avoiding circulating currents, each converter arm 27, 28 may furthermore comprise an inductance, as indicated in the drawing. Apart from, having only exactly two converter legs 25, 26, the modular multilevel converter 20 may be configured similar to conventional multilevel converters. Such MMCs are known to the skilled person, so that no further details are given on the MMC 20 here. The MMC 20 may for example be configured as described in the publication "An innovative modular multilevel converter topology suitable for a wide power range" by A. Lesnikcow and R. Marquardt, in proceedings of IEEE power tech conf. 2003 pp. 1 - 6, which is incorporated herein by reference in its entirety.

In the example of figure 2, the DC transmission line 40 schematically shows two conductors. In a particular implementation, the DC transmission system may be implemented with a single transmission line and an earth return. Accordingly, one terminal, e.g. terminal 22 of inverter 20 may be connected to earth ground. In other implementations, two metallic conductors may be used in the transmission line 40. Other implementations are also conceivable, such as a bipolar transmission by a pair of conductors, wherein each conductor has a high potential with respect to ground, of opposite polarity.

The inverter 20 further has a fist AC output 23 for a first phase L₁ of the output AC voltage and a second AC output 24 for a second phase L₂ of the AC voltage. Furthermore, a connection for neutral (N) is provided. The first and second AC output 23, 24 of inverter 20 are coupled to corresponding AC inputs 31 of the transformer 30. Transformer 30 is a two-phase to three-phase AC transformer, i.e. it transforms a two-phase AC voltage provided at the AC input 31 into a three-phase AC voltage provided at an AC output 32. In figure 2, the three-phases at the three-phase AC output 32 are designated by Y₁, Y₂ and Y₃.

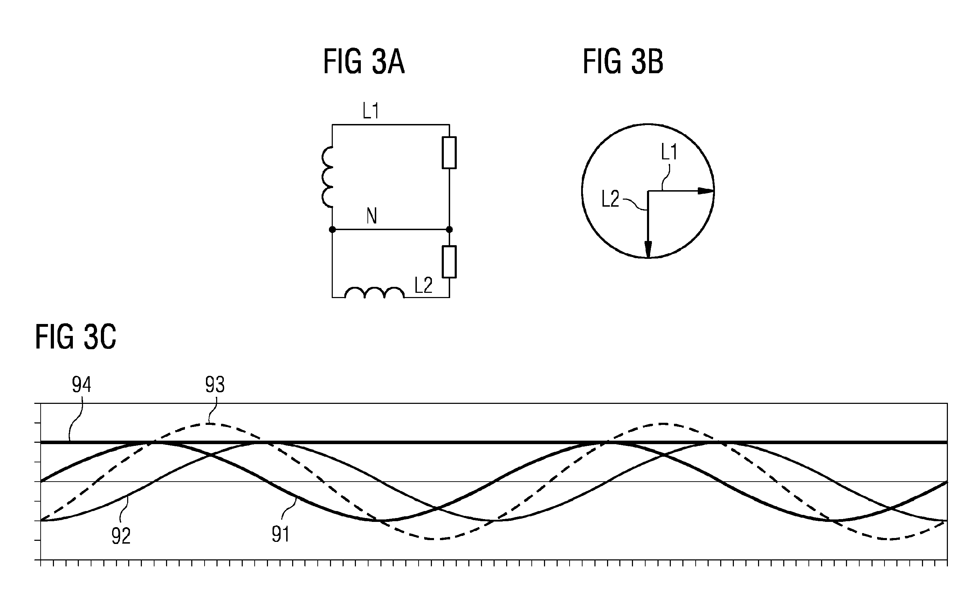

Inverter 20 is configured so that the converter legs 25, 26 provide at the outputs 23, 24 two AC voltages that are phase shifted by 90 °C with respect to each other. This is schematically illustrated in figure 3. Figure 3A shows an equivalent circuit diagram for illustrating the phase shift of phases L₁ and L₂. Figure 3B shows a phase diagram. It can be readily recognized that a 90 °C phase shift exists between the phases L₁ and L₂ provided at the output of inverter 20. The wave forms are schematically illustrated in figure 3C.

The curve 91 illustrates the phase L₁ of the output AC voltage, while the curve 92 illustrates the phase L₂. Curve 93 is the sum of the voltages. As can be seen from figure 3C, the two-phase system is capable of delivering an even power output as indicated by line 94, similar to a three-phase system.

The first and second AC outputs 23, 24 are electrically connected to the AC inputs 31 of the transformer 30, i.e. the phase shifted AC voltages L₁ and L₂ are provided at the AC input 31. Furthermore, a common ground connection N is provided between inverter 20 and transformer 30. Transformer 30 has a first pair of coils with a primary coil 33 and a secondary coil 34, and a second pair of coils with a primary coil 36 and a secondary coil 35. Primary coil 33 of the first pair of coils is connected between phase L₁ and neutral N. The primary coil of the second pair of coils is connected between neutral N and the second phase L₂,

The three-phase output terminals 32 are connected to the secondary coils of transformer 30 as follows. The first output at which phase Y₁ is provided is connected to a 86.6 % tap of the secondary coil 34 of the first pair of coils. The secondary coil 34 is furthermore connected to a 50 % tap of the secondary coil 35 of the second pair of coils. The second and third AC outputs of transformer 30 providing the phases Y₂ and Y₃ are electrically connected to respective ends of the secondary coil 35 of the second pair of coils.

In such configuration, the two phases L₁ and L₂, which have a phase difference of 90 °C, are transformed into the three phases Y₁, Y₂ and Y₃, each having a 120 °C phase shift to the other phases. In other words, if phase Y₁ is said to have a phase shift of 0 degrees, then Y₂ would have a phase shift of 120 degrees and Y₃ would have a phase shift of 240 degrees, thus providing conventional three-phase AC voltage. Consequently, the output of transformer 30 can be used for powering conventional devices that would otherwise operate on three-phase AC voltage provided by power grid 60. Transformer 30 may for example be a Scott-T transformer. Other types of transformers that are capable of transforming a two-phase AC voltage into a three-phase AC voltage may also be employed. Depending on the type of transformer, it is possible to adjust the phase difference between the first and second AC voltages provided at the outputs of inverter 20 so that the desired three-phase voltage is obtained at the transformer output.

The converter system 10 can be part of an HVDC converter station which receives electric power via the HVDC transmission line 40. It may for example be an HVDC converter station of an offshore platform. By implementing the converter system 10 in such setup, it is possible to install the offshore platform a considerable distance away from the nearest onshore site providing access to the power grid, while at the same time, the space and weight that are required by the converter system on the offshore platform can be kept small. In particular, as can be seen from figure 2, the inverter 20 only requires 2/3 of the power cells that are required in a conventional converter. Also, as can be seen from a comparison of figures 1 and 2, the transformer 30 of the converter system 10 only requires four transformer coils, while the transformer 80 requires six coils. Consequently, significant savings in weight, space and cost can be achieved. Similarly, the converter system 10 may be employed onshore, for example in an HVDC transmission system which transports electric energy from an offshore wind farm to an onshore site. In other configurations, converter system 10 may be operated in reverse, i.e. the inverter 20 may operate as a rectifier. Converter system 10 may thus be used for converting an AC voltage received on the three AC terminals 32, which then act as AC inputs, into a DC voltage which is given out at the DC terminals 21, 22. The output DC voltage can then be used for transporting electric energy over the DC transmission line 40.

It should be clear that further components may be provided in the converter system 10, such as filters, reactive power compensators, symmetrisation units or the like. Also, it should be clear that the inverter 20 may have a different configuration than the one illustrated in figure 2, and that also different configurations of transformer 30 are conceivable.

While specific embodiments are disclosed herein, various changes and modifications can be made without departing from the scope of the invention. The present embodiments are to be considered in all respect as illustrative and non restrictive, and all changes coming within the meaning and equivalency range of the appended claims are intended to be embraced therein.

## Claims

1. A converter system for converting a DC voltage received on a DC input to a three phase AC voltage, the converter system comprising:
- a two phase inverter (20) providing the DC input (21, 22) and having a first and a second AC output (23, 24), the two phase inverter (20) being configured to convert a DC voltage applied to the DC input into a first AC voltage (L1) provided at the first AC output (23) and a second AC voltage (L2) provided at the second AC output (24), wherein the first and second AC voltages (L1, L2) are phase shifted with respect to each other; and
- a transformer (30) having two AC inputs (31) and three AC outputs (32), the two AC inputs being connected to the first and second AC outputs (23, 24) of the two phase inverter (20), wherein the transformer is adapted to transform the first and second AC voltages (L1, L2) supplied by the two phase inverter into a three phase AC voltage (Y1, Y2, Y3), each phase of three phase AC voltage being provided at a different one of the three AC outputs (32), wherein each phase of the three phase AC voltage (Y1, Y2, Y3) is phase shifted with respect to each of the other two phases.

2. The converter system according to claim 1, wherein the converter system (10) is an HVDC converter system, the DC input (21, 22) of which is coupled to an HVDC transmission line (40).

3. The converter system according to claim 1 or 2, wherein the two phase inverter (20) has a first converter leg (25) connected between a first DC terminal (21) and a second DC terminal (22) of the DC input and a second converter leg (26) connected in parallel to the first converter leg (25) between the first DC terminal (21) and the second DC terminal (22), wherein the first and the second AC outputs (23, 24) are coupled to the first and second converter legs (25, 26), respectively.

4. The converter system according to claim 3, wherein each converter leg (25, 26) comprises a first converter arm (27) and a second converter arm (28) connected in series between the first and second DC terminals (21, 22), wherein the first AC output (23) is connected between the first and second converter arms (27, 28) of the first converter leg (25) and wherein the second AC output (24) is connected between the first and second converter arms (27, 28) of the second converter leg (26), each converter arm comprising two or more converter cells (29).

5. The converter system according to claim 4, wherein each converter cell (29) is operable as a controlled voltage source.

6. The converter system according to any of the preceding claims, wherein the two phase inverter (20) is a two phase multilevel converter, in particular a two phase modular multilevel converter (MMC).

7. The converter system according to any of the preceding claims, wherein the two phase inverter (20) is configured to employ pulse width modulation for performing a DC to AC conversion.

8. The converter system according to any of the preceding claims, wherein the phase shift between the first and the second AC voltages (L1, L2) provided by the two phase inverter is about 90 degrees.

9. The converter system according to any of the preceding claims, wherein the phase shift between each two of the phases of the three phase AC voltage (Y1, Y2, Y3) is about 120 degrees.

10. The converter system according to any of the preceding claims, wherein the transformer (30) has a first pair of coils and a second pair of coils, each pair of coils having a primary coil (33; 36) and a secondary coil (34; 35).

11. The converter system according to claim 10, wherein the primary coil (33) of the first pair of coils is connected between the first AC output (23) of the two phase inverter and neutral (N), and wherein the primary coil (36) of the second pair of coils is connected between the second AC output (24) of the two phase inverter and neutral (N).

12. The converter system according to claim 9 or 10, wherein the secondary coil (35) of the second pair of coils is connected between a second AC output and a third AC output of the three AC outputs (32) of the transformer, and wherein the secondary coil (34) of the first pair of coils is at one end connected to a center tap of the secondary coil (35) of the second pair of coils, a first AC output of the three AC outputs (32) of the transformer being connected to an about 86.6% tap of the secondary coil (34) of the first pair of coils.

13. The converter system according to any of the preceding claims, wherein the transformer (30) is a Scott-T transformer.

14. A converter station of a HVDC transmission system comprising a converter system (10) according to any of claims 1-13.

15. An offshore installation, in particular an offshore platform or a subsea installation, comprising a converter station according to claim 14.
